Europäisches Patentamt

European Patent Office

Office européen des brevets

(19)

(11) Veröffentlichungsnummer: **0 134 585**

**A1**

(12) **EUROPÄISCHE PATENTANMELDUNG**

(21) Anmeldenummer: **84110698.2**

(22) Anmeldetag: **07.09.84**

(51) Int. Cl.⁴: **G 06 K 11/06**
**H 01 H 25/04**

(30) Priorität: **12.09.83 DE 3332825**

(43) Veröffentlichungstag der Anmeldung:
**20.03.85 Patentblatt 85/12**

(84) Benannte Vertragsstaaten:
**AT BE CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Mügge, Harry**
**Johann-Clanze-Strasse 19**
**D-8000 München 70(DE)**

(72) Erfinder: **Nooss, Wolfgang, Dipl.-Ing.**
**Kandinskystrasse 27**
**D-8000 München 71(DE)**

(72) Erfinder: **Schullerus, Wolfgang, Dipl.-Ing.**
**Anwänden 5**
**D-8026 Ebenhausen(DE)**

(54) **Steuervorrichtung mit einem Mehrfachkoordinatenschalter zur Tastenbetätigung.**

(57) Die Erfindung betrifft eine Steuervorrichtung mit einem Mehrfachkoordinatenschalter zur Tastenbetätigung; der Mehrfachkoordinatenschalter ist in einem auf eine Tastatur (2) bedarfsweise aufsteckbaren Gehäuse (1) angeordnet; er weist einen Steuerhebel (5) auf, der in senkrechter Richtung nach unten und/oder in seitlich schräger Richtung manuell betätigbar ist; das untere Ende des Steuerhebels (5) ist als Betätigungsansatz (10) ausgebildet; der Steuerhebel (5) ist mit einer Art Taumelscheibe (7) verbunden, die über ihren Umfang verteilt Betätigungsansätze (6) aufweist; die Betätigungsansätze (6) entsprechen in ihrer Anordnung der Anordnung der Tasten (3) eines ausgewählten Tastaturbereiches auf der Tastatur (7); die Steuervorrichtung ist bei verschiedenen Tastaturen verwendbar und auf der Tastatur verschiebbar.

FIG 1

EP 0 134 585 A1

SIEMENS AKTIENGESELLSCHAFT     Unser Zeichen
Berlin und München            VPA
                              83 P 1672 E

Steuervorrichtung mit einem Mehrfachkoordinatenschalter
zur Tastenbetätigung

Die Erfindung betrifft eine Steuervorrichtung zur manuellen Betätigung einer oder mehrerer Tasten einer Tastatur, mit einem Mehrfachkoordinatenschalter insbesondere zur Positionierung einer Markierung auf dem Bildschirm eines Sichtgerätes.

Zur Positionierung einer Markierung, beispielsweise zur Positionierung eines Fadenkreuzes oder eines Cursors auf dem Bildschirm eines Sichtgerätes, ist es allgemein bekannt, entweder mehrere Tasten für die verschiedenen Koordinatenrichtungen oder einen Mehrfachkoordinatenschalter vorzusehen. Ein Beispiel für den ersten Fall ist in der US-PS 3 731 299 beschrieben. Eine Mehrfachkoordinatenschalter gemäß dem zweiten Fall ist beispielsweise in der US-PS 3 883 861 angegeben. Hinweise auf den Aufbau eines Mehrfachkoordinatenschalters dieser Art finden sich beispielsweise in der IBM-Technical Disclosure Bulletin, Vol. 21, No. 8, 1979, Seite 3261 und IBM-Technical Disclosure Bulletin, Vol. 21, No. 12, Mai 1979, Seiten 4262 bis 4264.

Für eine Tastatur, bei der die Tasten zur Positionierung einer Markierung für den Bildschirm eines Sichtgerätes als Einzeltasten in einem Bereich der Tastatur angeordnet sind, wird häufig nach einer Möglichkeit gesucht, diese in der Art einer Mehrfachfunktionstaste zu betätigen. Daraus resultiert die Aufgabe der Erfindung.

Fk 1 Obh / 07.09.83

Diese besteht somit darin, für eine Tastatur mit einzelnen Positionierungstasten zur Steuerung einer Markierung für den Bildschirm von Sichtgeräten eine einfache und aufwandsarme Anordnung zu schaffen, diese Tasten mit einer Multifunktionstastenanordnung zu betätigen, wobei die Anordnung jederzeit und ohne weiteres einsetzbar, also bespielsweise nachrüstbar ist.

Gelöst wird diese Aufgabe gemäß den kennzeichnenden Merkmalen des Patentanspruches 1.

Die wesentlichen Vorteile der erfindungsgemäßen Vorrichtung bestehen darin, daß die Vorrichtung bei Bedarf ohne weiteres auf eine vorhandene Tastatur einfach aufsteckbar ist. Die Erfindung erfüllt somit die Forderung, auch für die Bedienung einer normalen Tastatur die Möglichkeiten für eine Bedienung nach Art einer Multifunktionstaste zu schaffen. Zugleich wird damit auch eine weitere Forderung dadurch erfüllt, daß außer den die Richtungspositionierung der Markierung bestimmenden Tasten auch eine zusätzliche den sogenannten Schnellgang bei Datensichtgeräten dieser Art auslösende Taste sicher betätigt werden kann.

Weitere Ausgestaltungen der Erfindung sind in den Unteransprüchen gekennzeichnet.

Die Erfindung wird im folgenden anhand der Zeichnungen erläutert. Dort zeigen

Fig. 1 ein erstes Ausführungsbeispiel,
Fig. 2 die Anordnung nach Fig. 1 in Aufsicht,
Fig. 3 ein zweites Ausführungsbeispiel nach der Erfindung und
Fig. 4 ein drittes Ausführungsbeispiel der Erfindung.

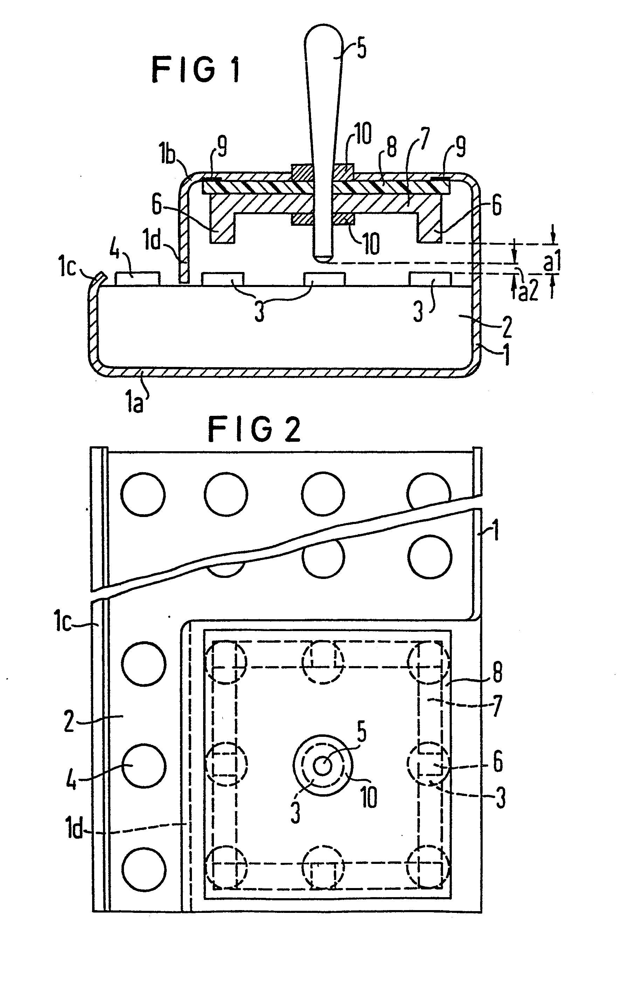

Das Ausführungsbeispiel nach Fig. 1 zeigt in Form einer Schnittdarstellung ein Gehäuse 1,das teilweise offen ausgeführt ist und auf eine Tastatur 2 aufsteckbar ist. Die Tastatur 2 ist eine an sich bekannte Tastatur mit mechanisch betätigbaren Tasten 3. Es sei für die folgenden Ausführungen angenommen, daß die Tasten 3 die zur Richtungspositionierung und zur Steuerung des Schnellganges vorgesehenen Tasten darstellen. Außer diesen Tasten weist die Tastatur 2 selbstverständlich noch weitere Tasten 4 auf.

Das Gehäuse 1 ist u-förmig gestaltet, wobei der eine Schenkel ein unteres Gehäuseteil 1a und der andere Schenkel ein oberes Gehäuseteil 1b bildet. Das untere Gehäuseteil 1a entspricht in seinen Abmessungen den Abmessungen der Tastatur 2; das obere Gehäuseteil 1b entspricht in seinen Abmessungen den Abmessungen des Bereiches der Tastatur 2, in dem die zu betätigenden Tasten 3 angeordnet sind. Sowohl das obere als auch das untere Gehäuseteil 1a und 1b weisen jeweils ein abgewinkeltes Endteil 1c und 1d auf.

Aufgrund der Gestaltung des Gehäuses 1 umfassen dessen unterer Teil 1a und dessen oberer Teil 1b die Tastatur 2 federnd.Dadurch wird einerseits ein leichtes Aufstecken des Gehäuses auf die Tastatur ermöglicht und andererseits ein fester und sicherer Sitz im aufgesteckten Zustand gewährleistet. Im oberen Gehäuseteil 1b ist ein Steuerhebel 5 angeordnet, der durch eine Öffnung im oberen Gehäuseteil 1b nach innen ragt und im aufgesetzten Zustand des Gehäuses 1 unmittelbar über der mittleren Taste des ausgewählten Tastenbereiches liegt. Am Steuerhebel 5 ist eine mit Betätigungsansätzen 6 versehene schwenkbare Platte 7 vorgesehen, die nach Art einer sogenannten Taumelscheibe ausgebildet ist. Die Betätigungsansätze 6 entsprechen in ihrer geometrischen Anordnung der Anordnung der Tasten 3 im ausgewählten Bereich der Tastatur 2. Die Taumelscheibe 7 ist im Beispiel rechteckig ausgebildet und besitzt, wie aus Fig. 2 ersichtlich ist, beispielsweise entsprechend der Verteilung der Tasten 3 im ausgewählten Tastaturbereich acht über den Umfang der Taumelscheibe 7 verteilte Betätigungsansätze 6. Zwischen dem oberen Gehäuseteil 1b und der Taumelscheibe 7 ist ein aus elastischem Material bestehender Verbindungsteil 8 angeordnet. Im Ausführungsbeispiel nach Fig. 1 ist dieser Teil eine Gummischeibe, die jeweils an ihren äußeren Rändern 9 mit dem Gehäuseteil 1a verbunden ist. Der Steuerhebel 5 ist beidseitig der Durchführung am oberen Gehäuseteil 1b mittels eines Befestigungselementes 10, beispielsweise mittels einer Schraubverbindung, gehalten.

Zur Erläuterung der Wirkungsweise wird im folgenden auch auf Fig. 2 verwiesen.

Vor dem Einsatz der Steuervorrichtung wird diese zunächst auf die vorgesehene Tastatur aufgesteckt. Das geschieht in der Weise, daß die beiden Gehäuseteile 1a und 1b etwas auseinander gespreizt werden und auf die Tastatur 2 aufgesteckt oder aufgeschoben werden. Das freie Endteil 1c des Gehäuses 1 umfaßt dabei die Tastatur 2; das freie Endteil 1d stützt sich auf der Tastatur 2 ab. Damit ist ein fester Sitz gewährleistet. Der in das Innere des Gehäuses 1 hineinragende untere Teil des Steuerhebels 5 befindet sich dabei über einer mittleren Taste 3 des ausgewählten Tastaturbereiches. Die Betätigungsansätze 6 der Taumelscheibe 7 befindet sich unmittelbar über weiteren Tasten des ausgewählten Tastaturbereiches. Im Beispiel sind über den Umfang der Taumelscheibe 7 acht Betätigungsansätze 6 verteilt angeordnet, so daß eine Positionierung in $45^{o}$-Schritten möglich ist. Die jeweils über den Umfang der Taumelscheibe 7 verteilt angeordneten Be-

0134585

tätigungsansätze 6 sind derart gestaltet, daß im aufgesteckten Zustand deren Abstand al von den ihnen zugeordneten Tasten 3 etwas größer ist als der Abstand a2 zwischen dem durch den unteren Teil des Steuerhebels 5 gebildeten Betätigungsansatz 10 und der mittleren Taste. In Folge des elastischen Verbindungsteiles 8 ist eine Betätigung des Steuerhebels 5 sowohl nur in senkrechter Richtung nach unten als aber auch in seitlicher Richtung möglich. Die Betätigung kann ohne nennenswerte Schwierigkeiten auch derart sein, daß eine senkrecht nach unten weisende und eine durch Schrägstellung des Steuerhebels 5 bewirkte seitliche Bewegung vorgenommen wird. Damit wird erreicht, daß die mittlere Taste im ausgewählten Tastaturbereich und zugleich mindestens eine weitere Taste dieses Bereiches betätigt wird. Diese Maßnahme ist besonders dann vorteilhaft, wenn die mittlere Taste des ausgewählten Tastaturbereiches zur Auslösung des sogenannten Schnellganges führt. Nach Beendigung einer Betätigung des Steuerhebels 5 geht dieser automatisch wieder in seine Ausgangs- oder Ruhelage zurück. Die Steuervorrichtung kann bei Bedarf durch Auseinanderspreizen der Gehäuseteile la und lb problemlos wieder von der Tastatur 2 abgezogen werden. Durch eine entsprechende Dimensionierung der Gehäuseabmessungen kann die Steuervorrichtung einer Verwendung für die verschiedensten Tastaturen angepaßt werden.

Gemäß einer Ausgestaltung der Erfindung ist vorgesehen, den Steuerhebel in Form eines in einem Rohr verlaufenden Stab auszubilden, der gegen eine Federkraft verschiebbar ist.

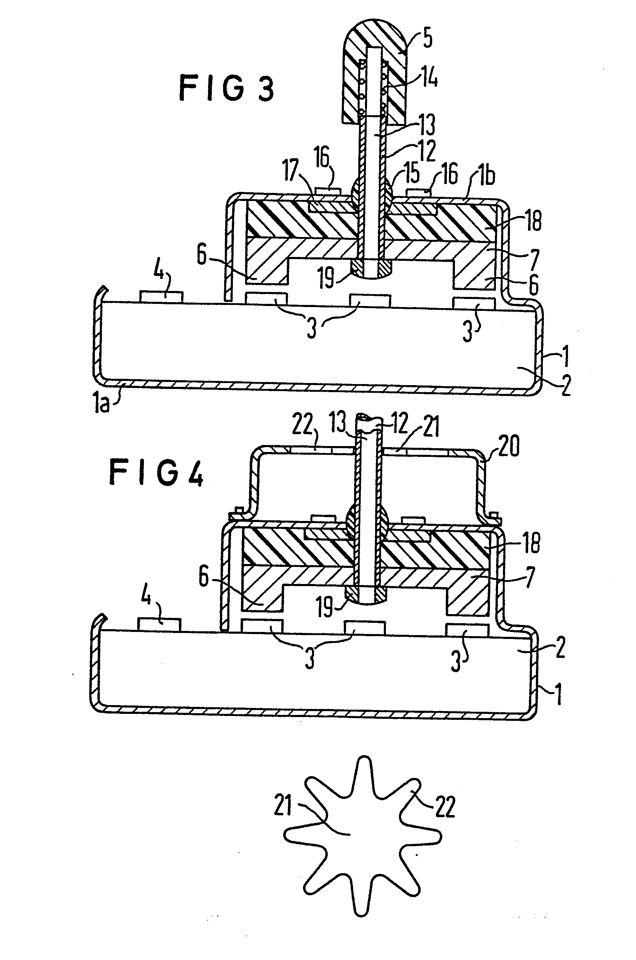

Ein Beispiel für diese Ausgestaltung zeigt Fig. 3. Zur Form und zum Aufbau des Gehäuses 1 sowie zu dessen lösbaren Befestigungen an der Tastatur 2 wird auf die Beschreibung zu Fig. 1 verwiesen. Im Unterschied zu der

0134585

dort dargestellten Ausführungsform besteht hier der Steuerhebel 5 aus einem Rohr 12, in dem ein Stab 13 gegen eine Feder 14 verschiebbar geführt ist. Im Eintrittsbereich des Rohres 12 in das Gehäuse ist zur Fixierung des Rohres 12 eine Kugel 15 vorgesehen, durch die das Rohr 12 hindurchgeführt ist. Die Kugel 15 kann z.B. mittels Schraubverbindungen 16 und Befestigungselemente 17 am oberen Gehäuseteil 1a befestigt werden. Am unteren in das Gehäuse hineinragenden Ende des Rohres 12 ist die wiederum als sogenannte Taumelscheibe ausgebildete Platte 7 befestigt. Zur Sicherung einer definierten Ausgangsstellung des Steuerhebels 5, d.h.zur sogenannten Nullageneinstellung, befindet sich zwischen der Taumelscheibe 7 und dem oberen Gehäuseteil 1a eine flexible Einlage 18, beispielsweise eine Schaumgummischicht.

Die Taumelscheibe 7 weist, wie anhand von Fig. 1 bereits beschrieben wurde, über ihren Umfang verteilte Betätigungsansätze 6 auf, deren Anordnung der Anordnung der Tasten 3 im ausgewählten Tastaturbereich entspricht. Der mittlere Betätigungsansatz 19 ist hier durch das untere Ende des Stabes 13 gebildet. Die Taumelscheibe 7 weist dazu eine mittige Öffnung auf, die den Stab 13 führend aufnimmt. Es ist vorteilhaft, den Stab 13 an seinem unteren Ende abgerundet zu gestalten. Dadurch wird die gleichzeitige Betätigung mehrerer Tasten durch Drücken und durch Schrägstellen des Steuerhebels 5 erleichtert. Insgesamt wird mit dieser Ausgestaltung der Erfindung eine bessere und sicherere Betätigung mehrerer Tasten gleichzeitig gewährleistet. Das ist von Vorteil, wenn z.B. mit der mittleren Taste der sogenannte Schnellgang und mit den seitlichen Tasten eine ausgewählte Richtungspositionierung ausgelöst wird.

Gemäß einer weiteren Ausgestaltung der Erfindung wird vorgeschlagen, in der Steuervorrichtung eine Führung für den Steuerhebel 5 vorzusehen. Ein Ausführungsbeispiel dazu zeigt Fig. 4.

Hinsichtlich Aufbau und Funktionsweise der Steuervorrichtung nach Fig. 4 wird auf die Beschreibung zu Fig. 3 verwiesen. Im Unterschied zu der dort gezeigten Ausführung weist die Vorrichtung nach Fig. 4 einen zusätzlichen Führungsbereich 20 mit einer Kulissenführung 21 auf. Der Führungsbereich 20 ist am oberen Gehäuseteil 1a befestigt. Die Kulissenführung 21 besitzt entsprechend den Positionierungsrichtungen eine Reihe von sternförmig ausgeprägten Ausnehmungen 22. Diese gewährleisten eine Verbeserung der Führung des Steuerhebels 5. Die Stärke der Ausnehmungen 22 kann für verschiedene Anwendungsfälle variabel gestaltet sein. Bei einer starken Ausprägung, wie in Fig. 4 gezeigt, wird die Führung des Steuerhebels erleichtert, jedoch wird eine Änderung der Richtung während eines Positioniervorganges erschwert. Bei schwächer ausgeprägten Ausnehmungen wird die Führungseigenschaft der Kulissenführung reduziert, die Möglichkeit einer Richtungsänderung während eines Positionierungsvorganges jedoch verbessert. Die lösbare Befestigung des Führungsbereiches 20 ermöglicht es, für ein und dieselbe Steuervorrichtung Kulissenführungen mit verschieden ausgeprägten Ausnehmungen einzusetzen.

6 Patentansprüche
4 Figuren

## Patentansprüche

1. Steuervorrichtung zur manuellen Betätigung ausgewählter Tasten einer Tastatur mit einem Mehrfachkoordinatenschalter, insbesondere zur Positionierung einer Markierung auf dem Bildschirm eines Sichtgerätes, dadurch gekennzeichnet, daß der Mehrfachkoordinatenschalter in einem teilweise offenen u-förmig gestalteten Gehäuse (1, 1a, 1b, 1c, 1d) angeordnet ist,

daß der den oberen Gehäuseteil (1b) bildende Schenkel in seiner Länge dem die ausgewählten Tasten (3) der Tastatur (2) enthaltenden Bereich entspricht und an der offen Seite des Gehäuses ein abgewinkeltes Teil (1b) aufweist,

daß der den unteren Gehäuseteil (1a) bildende, in seiner Länge den Abmessungen der gesamten Tastatur (2) entsprechende Schenkel (1a) an der offenen Seite des Gehäuses (1) ebenfalls ein abgewinkeltes Endteil (1c) aufweist,

daß das Gehäuse (1) auf die Tastatur (2) lösbar aufsteckbar ist, wobei das abgewinkelte Endteil (1c) des unteren Gehäuseteiles (1a) die Tastatur (2) federnd umgreift und das abgewinkelte Endteil (1d) des oberen Gehäuseteiles (1b) sich an der Tastatur (2) abstützt, daß im oberen Gehäuseteil (1b) ein Steuerhebel (5) geführt ist, dessen in das Gehäuseinnere ragende Ende als Betätigungsansatz (10) ausgebildet ist und mit einer durch Schrägstellen des Steuerhebels (5) verschwenkbaren Platte (7) verbunden ist, und daß auf der Platte (7) Betätigungsansätze (6) vorgesehen sind, deren Anordnung der Anordnung der Tasten (3) im ausgewählten Tastaturbereich entsprechen.

0134585

83 P 1672 E

2. Steuervorrichtung nach Anspruch 1,
d a d u r c h   g e k e n n z e i c h n e t , daß zwischen der Platte (7) und dem oberen Gehäuseteil (1b)
ein biegsames Verbindungsteil (8) vorgesehen und mit
dem oberen Gehäuseteil (1b) derart verbunden ist, daß
der Steuerhebel (5) sowohl eine senkrecht nach unten
gerichtete Bewegung und/oder eine seitlich schräg gerichtete Bewegung ausführen kann.

3. Steuervorrichtung nach Anspruch 1 und 2,
d a d u r c h   g e k e n n z e i c h n e t ,
daß die über den Umfang der Platte (7) verteilten Betätigungsansätze (6) kürzer sind als der durch das Ende des
Steuerhebels (5) gebildete Betätigungsansatz (10).

4. Steuervorrichtung nach Anspruch 1,
d a d u r c h   g e k e n n z e i c h n e t ,
daß der Steuerhebel (5) aus einem in einem Rohr (12)
geführten Stab (13) besteht, der gegen eine Feder (14)
nach unten beweglich ist, und an seinem in das Gehäuse
hineinragenden unteren Ende einen Betätigungsansatz (9)
aufweist,
daß das Rohr (12) im oberen Gehäuseteil (1b) verschwenkbar geführt ist, mittels (15, 18)   und an seinem in das
Gehäuse (1) hineinragenden Ende mit einer Taumelscheibe
verbunden ist, über deren Umfang verteilt weitere Betätigungsansätze (6) angeordnet sind.

5. Steuervorrichtung nach Anspruch 4,
d a d u r c h   g e k e n n e z e i c h n e t ,
daß zur schwenkbaren Führung des Steuerhebels (5) das
Rohr (12) im oberen Gehäuseteil (1b) in einer Kugel (15)
geführt ist,
daß zwischen der Taumelscheibe (7) und der Wandung des
oberen Gehäuseteiles (1b) eine elastische Platte (18)
vorgesehen ist, die am oberen Gehäuseteil befestigt ist

- 10 -     VPA     83 P 1 6 7 2 E     0134585

und die die Kugel (15) aufnimmt.

6. Stuervorrichtung nach einem der Ansprüche 1 bis 4,
d a d u r c h   g e k e n n z e i c h n e t ,
daß der Steuerhebel (5) in einer Kulissenführung (20, 21,
22) mit dem Positionierungsrichtungen entsprechenden
Ausprägungen (22) geführt ist,
und daß die Kulissenführung (20, 21, 22) lösbar mit dem
Gehäuse (1) verbunden ist.

0134585

FIG 1

FIG 2

FIG 3

FIG 4

0134585

Nummer der Anmeldung

**EUROPÄISCHER RECHERCHENBERICHT**

EP  84 11 0698

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| P,A | IBM TECHNICAL DISCLOSURE BULLETIN, Band 26, Nr. 7B, Dezember 1983, Seiten 3746-3747, New York, USA; R.W. TRUELSON: "Single-key cursor control" <br><br> --- | | G 06 K   11/06 <br> H 01 H   25/04 |
| D,A | IBM TECHNICAL DISCLOSURE BULLETIN, Band 21, Nr. 8, Januar 1979, Seite 3261, New York, USA; W.C. McCORNACK: "Single keybutton four-way switch" <br><br> ----- | | |

|  |
|---|
| RECHERCHIERTE SACHGEBIETE (Int. Cl.4) |
| G 06 K   11/06 <br> H 01 H   25/04 <br> H 01 H   13/70 <br> G 05 G    9/04 |

Der vorliegende Recherchenbericht wurde für alle Patentansprüche erstellt.

| Recherchenort | Abschlußdatum der Recherche | Prüfer |
|---|---|---|
| DEN HAAG | 14-11-1984 | CERVANTES J.P.J. |